# EUROPEAN PATENT SPECIFICATION

(11) **EP 1 453 701 B1**
(45) Date of publication and mention of the grant of the patent: **21.09.2005**
(21) Application number: 02783939.8
(22) Date of filing: 11.11.2002
(51) Int. Cl.: B60R 16/08

(54) **RESERVOIR FOR FLUID**
BEHÄLTER FÜR FLUID
RESERVOIR POUR FLUIDE

(30) Priority: 14.11.2001 SE 0103787
(43) Date of publication of application: 08.09.2004
(73) Proprietor: Scania CV AB (publ), 151 87 Södertälje (SE)
(72) Inventor: PETTERSSON, Johnny, S-640 23 Valla (SE)
(86) International application number: PCT/SE2002/002045
(87) International publication number: WO 2003/042003

(56) References cited:
- SE-B- 439 809

## Description

### Technical field

The present invention relates to a container unit of the kind indicated in the preamble of claim 1. Such a container unit is known from SE-A- 439 809.

### State of the art

In such a container unit, which incorporates a filter housing and, connected to the latter, a main container, liquid which is to be filtered and deaerated is introduced via a liquid inlet in the lower portion of the filter housing, and liquid which has been filtered and deaerated is drawn off from the main container via a liquid outlet in the lower portion of the latter. The liquid may for example be hydraulic liquid (hydraulic oil) used for hydrostatic powering of some type of equipment. It may for example be hydraulic liquid which in a vehicle is used for driving a fan.

The purposes of the filter which is arranged in the filter housing and is with advantage interchangeable comprise inter alia the separation of contaminating particles from the liquid, since the presence of such particles in the liquid may disturb or prevent the operation of the equipment which the liquid is used for powering. As the particles separated by means of the filter accumulate in the latter, the filter will gradually become more or less obstructed, resulting in a need to clean or replace the filter. During operation, hydraulic liquid will also often absorb air in the form of small air bubbles which also need removing from the liquid to avoid impairing its characteristics.

### Objects of the invention

The primary object of the invention is to provide a container unit which exhibits good filtration and deaeration characteristics while at the same time its external dimensions and weight are minimised. As it is desirable, inter alia for cost reasons, to be able to use standardised types of liquid filters, it is difficult to reduce the dimensions and weight of the filter housing, which means that endeavours to minimise the dimensions and weight of the container unit have in practice to be concentrated on the design of the main container. Small external dimensions of the main container (and hence of the whole container unit) are particularly desirable, especially in vehicle applications, since shortage of space is almost always a limiting factor in the design of vehicles.

For the deaeration which takes place in the main container to be as effective as possible, the hydraulic liquid which is cleaned by passing through the filter and flows from inside the filter housing to the main container needs, even during continuous operation of (i.e. flow through) the hydraulic liquid circuit concerned, to spend sufficient time in the main container for the air bubbles in the hydraulic liquid to make their way up to the surface of the liquid volume in the main container. For this to be possible, low velocity of liquid flow in the main container is required.

A simple way of achieving such a low flow velocity might of course be to adopt a main container with relatively large volume, but such a large volume naturally also entails large external dimensions of the main container which conflict with endeavours to minimise the external dimensions of the container unit.

Another object is to provide a container unit which is able to accommodate the changes of volume of the liquid which may occur during operation, e.g. due to change of temperature of the liquid.

A further object of the invention is to adopt a constructional configuration of the container unit such that the latter can be manufactured in a cost-effective manner and be made of lightweight material, preferably of plastic.

### Description of the invention

The abovementioned objects are achieved according to the invention by the container unit of the kind indicated in the introduction exhibiting the features indicated in the characterising part of claim 1. Embodiments of the container unit which are further developed and are preferred from various points of view may also exhibit the features indicated in the dependent claims.

The primary distinguishing feature of the container unit according to the invention is thus that the interior of the filter housing is in communication with the interior of the main container via at least two vertically separate flow passages, which means that the liquid flow from the filter housing to the main container is divided into two part-flows. This flow division is achieved by providing an upper flow passage (transfer channel) situated in the region of the upper portion of the filter, and a lower flow passage (transfer channel) situated in the region of the bottom of the filter housing. A liquid level measuring means whereby the magnitude of the liquid volume in the main container and filter housing can be established may also advantageously be arranged in the container unit, preferably in the main container.

The filter housing and the main container advantageously take the form of cylindrical "jar-like" vertically arranged vessels, and the filter is advantageously an interchangeable hollow cylindrical filter cartridge. The flow passages which connect the interior of the filter housing to the interior of the main container take the form preferably of an upper flow aperture and a lower flow aperture in a thickened wall portion which constitutes a shell wall section common to the filter housing and to the main container, and via which wall portion the filter housing and the main container are joined together. A conceivable alternative is that the filter housing and the main container be arranged with their shell walls clearly separate from one another, in which case the housing and the container are linked together by a short upper pipe element and a short lower pipe element, the respective internal channels of which then constitute the container unit's two vertically separated flow passages.

The liquid level measuring means may advantageously be, for example, a level measuring rod fastened in a cover which is provided with deaeration holes and which is detachably attached (e.g. arranged for snapping on or screwing) to a stub pipe directed upwards at the upper end of the main container. To ensure that the part-flows through the two liquid flow passages between the filter housing and the main container are substantially equal, the flow cross-sections of the passages are designed to be substantially equal in size.

The container unit may be made of suitable plastic or of sheetmetal, and in the former case blow moulding may perhaps be a suitable manufacturing method in this context.

### Brief description of the drawings

The invention will now be described and explained further with reference to an example of an embodiment of a liquid container unit according to the invention depicted in the attached drawings, in which:
Fig. 1 depicts a container unit in perspective view, and
Fig. 2 depicts (on a somewhat larger scale) the container unit as viewed in vertical section.

### Description of a preferred embodiment

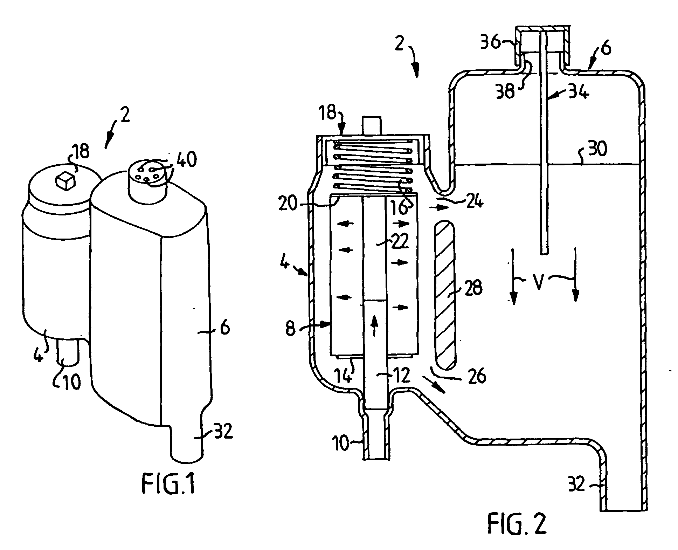

In the drawing, Fig. 1 and Fig. 2 depict a liquid container unit denoted as a whole by ref. 2 and consisting of a filter housing 4 which has its shell wall connected firmly to an adjacent main container 6. The filter housing 4 takes the form of a cylindrical vessel which contains a vertically arranged filter 8. The filter housing has at its bottom a centrally situated tubular liquid inlet 10 via which the liquid which is to be filtered and deaerated in the main container 2 is supplied. Inside the filter housing there is a liquid inlet pipe 12 which is inserted vertically in, and forms an extension of, the inlet 10 and is provided externally with an annular supporting flange 14 for the interchangeable filter 8 which takes the form of a hollow cylindrical filter cartridge.

The filter 8 is held in place in the filter housing 4 by means of a coil spring 16 which is clamped between a cover 18 which is screwed into the upper end of the filter housing and an end plate 20 which is placed on the upper end of the filter and presses the filter downwards towards the supporting flange 14. The liquid supplied via the inlet 10 and the inlet pipe 12 is filtered in the filter as it flows radially outwards from the central channel 22 of the filter through the cagelike filtering wall of the filter cartridge.

The interior of the filter housing 4 is in communication with the interior of the main container 6 via two vertically separated flow passages 24 and 26. The upper passage 24 is situated in the region of the upper end of the filter 8, while the lower passage 26 leads downwards directly from the bottom region of the filter housing to the bottom of the main container 6. The passages 24, 26 are thus situated at the respective upper and lower ends of a shell wall element 28 which is common to the housing 4 and to the container 6. The two passages 24,26 result in the flow of liquid from the housing 4 to the container 6 being divided into an upper part-flow and a lower part-flow respectively.

If the liquid filtered through the filter 8 contains air bubbles when it emerges from the filter, these bubbles will have a natural tendency to rise upwards in the filtered liquid inside the filter housing 4. This means that the bulk of these liquid-borne air bubbles will travel with the liquid flow out from the filter housing through the upper flow passage 24. The fact that the majority of the air which accompanies the liquid thus enters the main container 6 just below the surface 30 of the liquid in the main container creates good conditions for the air bubbles to make their way up to the surface 30 (thereby accomplishing effective deaeration of the liquid) before the liquid flows on out of the main container 6 via a liquid outlet 32 at the bottom of the container.

A further factor effectively contributing to the desired deaeration of the filtered liquid in the main container before the liquid leaves the latter via the outlet 32 is that the liquid's downward flow velocity v in the interior of the main container will be relatively low because the liquid flow from the filter housing to the main container 6 is divided into two approximately equal part-flows (via the passage 24 and the passage 26 respectively). This division of the total flow from the filter housing 4 to the main container 6 into two approximately equal part-flows is brought about by the two passages 24 and 26 being provided with substantially equally large flow cross-sections. Finally, it may be mentioned that the main container 6 is provided with a liquid level measuring means consisting of a liquid measuring rod 34 fastened in a detachable cover 36 which is similar to the cap of a bottle and which can be snapped or screwed onto a possibly centrally situated neck portion 38 of the topmost part of the main container. The cover 36 is provided with air holes 40 which allow air to flow out/in through the cover as the level of the liquid surface 30 in the main container rises/falls.

## Claims

1. A container unit (2) for liquid which in the pressurised state is usable for hydrostatic powering of equipment, e.g. in vehicles, such as motor vehicles, which container unit comprises not only a filter housing (4) which is provided at the bottom with a liquid inlet (10) and accommodates a filter (8) which is in communication with the inlet, but also a main container (6) which is connected to the filter housing (4) and which has its interior in communication with the interior of the filter housing via at least one flow passage, which main container is provided at the bottom with a liquid outlet (32), **characterised in that** the interior of the filter housing (4) is in communication with the interior of the main container (6) via at least two vertically separate flow passages (24,26) whereby the flow of liquid from the filter housing to the interior of the main container is divided between an upper passage (24) situated in the region of the upper portion of the filter (8) and a lower passage (26) situated in the region of the bottom of the filter housing, and that a liquid level measuring means (34) is advantageously arranged in the container unit, preferably in the main container (6).

2. A container unit according to claim 1, **characterised in that** both the filter housing (4) and the main container (6) take the form of at least substantially cylindrical vessels intended to be fitted with their longitudinal axis directed substantially vertically, and that the filter (8) is an interchangeable hollow cylindrical filter fitted to a substantially vertical liquid inlet pipe (12) inside the filter housing.

3. A container unit according to claim 1 or 2, **characterised in that** the upper and lower flow passages (24 and 26 respectively) take the form of flow apertures in the shell wall element (28) via which the filter housing (4) and the main container (6) are joined together.

4. A container unit according to any one of claims 1-3, **characterised in that** the liquid level measuring means in the main container (6) comprises a level measuring rod (34) which is parallel with the vertical longitudinal axis of the container and is fastened in a bottletop-like cover (36) which is placed detachably on a neck portion (38) at the upper end of the main container and provided with air holes (40).

5. A container unit according to any one of the foregoing claims, **characterised in that** the upper and lower flow passages (24 and 26) have substantially equally large flow cross-sections so that at least approximately equal part-flows of cleaned liquid pass through them from the filter housing (4) to the main container (6).

6. A container unit according to any one of the foregoing claims, **characterised in that** the container unit (2) is made of plastic, e.g. by blow moulding.

## Patentansprüche

1. Behältereinheit (2) für ein Fluid, das in einem unter Druck gesetzten Zustand für das hydrostatische Antreiben einer Ausrüstung, beispielsweise in Fahrzeugen, wie beispielsweise motorisierten Fahrzeugen, geeignet ist, wobei die Behältereinheit nicht nur ein Filtergehäuse (4) aufweist, das am Boden mit einem Fluideinlass (10) versehen ist und einen Filter (8) aufnimmt, der mit dem Einlass kommuniziert, sondern auch einen Hauptbehälter (6) aufweist, der mit dem Filtergehäuse (4) verbunden ist und dessen Innenraum mit dem Innenraum des Filtergehäuses über wenigstens einen Strömungskanal in Verbindung steht, wobei der Hauptbehälter am Boden mit einem Fluidauslass (32) versehen ist,
**dadurch gekennzeichnet, dass** der Innenraum des Filtergehäuses (4) mit dem Innenraum des Hauptbehälters (6) über wenigstens zwei vertikal verlaufende separate Strömungskanäle (24, 26) in Verbindung steht, wobei die Fluidströmung von dem Filtergehäuse zum dem Innenraum des Hauptbehälters zwischen einem oberen Kanal (24), der im Bereich des oberen Abschnitts des Filters (8) angeordnet ist, und einem unteren Kanal (26), der im Bereich des Bodens des Filtergehäuses angeordnet ist, geteilt ist, und dass ein Fluidpegel-Messmittel (34) vorteilhafterweise in der Behältereinheit, vorzugsweise in dem Hauptbehälter (6), angeordnet ist.

2. Behältereinheit nach Anspruch 1,
**dadurch gekennzeichnet, dass** sowohl das Filtergehäuse (4) als auch der Hauptbehälter (6) die Form von wenigstens im Wesentlichen zylindrischen Gefäßen aufweisen, die dazu ausgebildet sind, dass sie derart eingesetzt werden, dass ihre Längsachse in im Wesentlichen vertikaler Richtung ausgerichtet ist, und dass der Filter (8) ein auswechselbarer hohlzylindrischer Filter ist, der auf ein im Wesentlichen vertikal verlaufendes Fluideinlassrohr (12) innerhalb des Filtergehäuses aufgesetzt ist.

3. Behältereinheit nach Anspruch 1 oder 2,
**dadurch gekennzeichnet, dass** der obere und untere Strömungskanal (24 und 26) die Form von Strömungsöffnungen in dem Außenwandelement (28) annehmen, über die das Filtergehäuse (4) und der Hauptbehälter (6) miteinander verbunden sind.

4. Behältereinheit nach einem der Ansprüche 1 bis 3,
**dadurch gekennzeichnet, dass** das Fluidpegel-Messmittel in dem Hauptbehälter (6) einen Pegelmessstab (34) umfasst, der parallel zu der vertikalen Längsachse des Behälters verläuft und in einem flaschenverschlussartigen Deckel (36) befestigt ist, der entfernbar an einem Halsabschnitt (38) am oberen Ende des Hauptbehälters angeordnet und mit Luftlöchern (40) versehen ist.

5. Behältereinheit nach einem der vorangehenden Ansprüche,
**dadurch gekennzeichnet, dass** der obere und untere Strömungskanal (24 und 26) im Wesentlichen gleichgroße Strömungsdurchmesser aufweisen, so dass im Wesentlichen näherungsweise gleichgroße Teilströmungen gereinigter Flüssigkeit durch diese von dem Filtergehäuse (4) zu dem Hauptbehälter (6) hindurchtreten.

6. Behältereinheit nach einem der vorangehenden Ansprüche,
**dadurch gekennzeichnet, dass** die Behältereinheit (2) aus Kunststoff, beispielsweise durch Blasformen, hergestellt ist.

## Revendications

1. Conteneur (2) pour un liquide qui, à l'état pressurisé, peut être utilisé pour la commande hydrostatique d'un équipement, par exemple dans des véhicules, tels que des véhicules à moteur, lequel conteneur comprend non seulement un logement de filtre (4), dont le fond est pourvu d'un orifice d'entrée de liquide (10), et qui loge un filtre (8) en communication avec l'orifice d'entrée, mais également un récipient principal (6) qui est raccordé au logement de filtre (4) et dont l'intérieur est en communication avec l'intérieur du logement de filtre, via au moins un passage d'écoulement, le fond dudit récipient principal étant pourvu d'un orifice de sortie de liquide (32), **caractérisé en ce que** l'intérieur du logement de filtre (4) est en communication avec l'intérieur du récipient principal (6), via au moins deux passages d'écoulement séparés dans la direction verticale (24, 26), par lesquels l'écoulement du liquide depuis le logement de filtre vers l'intérieur du récipient principal est divisé en un passage supérieur (24) situé dans la région de la partie supérieure du filtre (8) et un passage inférieur (26) situé dans la région du fond du logement de filtre, et **en ce que** des moyens de mesure du niveau de liquide (34) sont avantageusement disposés dans le conteneur, de préférence dans le récipient principal (6).

2. Conteneur selon la revendication 1, **caractérisé en ce que** le logement de filtre (4) et le récipient principal (6) se présentent tous les deux sous la forme de cuves au moins sensiblement cylindriques, destinées à être assemblées avec leur axe longitudinal dirigé d'une manière sensiblement verticale, et **en ce que** le filtre (8) est un filtre cylindrique creux interchangeable, assemblé à un tuyau d'entrée de liquide (12) sensiblement vertical, se trouvant à l'intérieur du logement de filtre.

3. Conteneur selon la revendication 1 ou 2, **caractérisé en ce que** les passages d'écoulement supérieur et inférieur (respectivement 24 et 26) se présentent sous la forme d'ouvertures d'écoulement ménagées dans l'élément de paroi d'enveloppe (28) par l'intermédiaire duquel le logement de filtre (4) et le récipient principal (6) sont raccordés l'un à l'autre.

4. Conteneur selon l'une quelconque des revendications 1 à 3, **caractérisé en ce que** les moyens de mesure du niveau de liquide dans le récipient principal (6) comprennent une tige de mesure du niveau (34) qui est parallèle à l'axe longitudinal vertical du récipient et qui est fixée dans un couvercle du type bouchon de bouteille (36), qui est placé d'une manière détachable sur une partie formant col (38) ménagée à l'extrémité supérieure du récipient principal, et qui est pourvu de trous d'aération (40).

5. Conteneur selon l'une quelconque des revendications précédentes, **caractérisé en ce que** les passages d'écoulement supérieur et inférieur (24 et 26) ont des sections transversales d'écoulement de dimensions sensiblement identiques, de telle sorte que des écoulements partiels approximativement égaux de liquide nettoyé traversent ces passages entre le logement de filtre (4) et le récipient principal (6).

6. Conteneur selon l'une quelconque des revendications précédentes, **caractérisé en ce que** le conteneur (2) est formé de plastique, par exemple par un procédé de moulage par extrusion-soufflage.
